# NEW EUROPEAN PATENT SPECIFICATION

(11) **EP 0 222 047 B2**
(45) Date of publication and mention of the opposition decision: **14.09.1994**
(45) Mention of the grant of the patent: 25.01.1989
(21) Application number: 85308263.4
(22) Date of filing: 13.11.1985
(51) Int. Cl.: G05B 9/03, B60T 8/00

(54) **Fail-safe control circuit**
Fehlersichere Steuerschaltung
Circuit de commande à l'abri de défaillances

(43) Date of publication of application: 20.05.1987
(73) Proprietor: NEC HOME ELECTRONICS LTD., Osaka-Shi Osaka (JP); HONDA GIKEN KOGYO KABUSHIKI KAISHA, Minato-ku Tokyo 107 (JP)
(72) Inventor: Baba, Satoshi, Kita-ku Osaka-shi Osaka (JP); Nose, Tadashi, Kita-ku Osaka-shi Osaka (JP); Muto, Tetsuji, Kawagoe-shi Saitama (JP); Fujimura, Yuji, Asaka-shi Saitama (JP)
(74) Representative: Brunner, Michael John

(56) References cited:
- EP-A- 0 115 994
- DE-B- 2 932 270
- FR-A- 2 345 321
- GB-A- 2 127 507

## Description

The present invention relates to a fail-safe control circuit for improving the controlling accuracy of a controlled device controlled by operation control units and, more particularly, the present invention is directed to a fail-safe control circuit which allows the operation control units to monitor a control signal for correctness and if any of the operation control units detect an error, the fail-safe control circuit fails-safe the controlled device by interrupting power thereto.

A fail-safe control circuit is generally provided in control systems to force a controlled device into a safe state when a malfunction occurs and the proper operation of such a fail-safe control circuit is very important when it is concerned with the control of a device affecting people's lives. For example, in an anti-skid brake control for a car, vehicle velocity and wheel rotation are monitored and supplied to an operation control unitsuch as a microcomputer/microprocessor. When wheel locking is detected, the braking operation is released to prevent the wheels from slipping thereby improving the braking function making it possible to accurately stop the car.

In an anti-skid brake control circuit, it is important to improve reliability, and therefore each control circuit is provided with a purality of identical operation control units arranged in parallel to process the same input in synchronism with each other using the same clock signal. The operation control units control the controlled device using an output signal based on majority voting type processing performed on the respective outputs of the operation control units thereby to improve reliability.

In circuits arranged in the manner described above, an erroneous signal may be produced by the majority voting circuit when one half or more of the plurality of operation control units operate incorrectly. As a result, it is impossible to determine whether the controlled device is operating correctly in accordance with the control output. In a case where, for example, a disconnection occurs in a solenoid which is the controlled device, the desired controlling operation cannot be performed which may cause a serious accident.

EP-A-0115994 discloses a fail-safe circuit connected to operational control units producing control signals, and to a controlled device, the fail-safe control circuit including detection means for detecting coincidence in time of the control signals and activating the controlled device when coincidence occurs.

An object of the present invention is to provide a fail-safe control circuit which allows operation control units to check their own outputs and it is another object to prevent erroneous operation when one of the operation control units is malfunctioning and to interrupt power to a controlled device whenever a malfunction occurs, thereby putting controlled device in a fail-safe state.

According to the present invention, a fail-safe control circuit connected to operational control units producing control signals and to a controlled device, thefaii-safe control circuit including detection means, is characterised by the detection means detecting agreement between the control signals, activating the controlled device when agreement occurs and producing a feedbacksignal, each operational control unit producing a disagreement signal when the respective control signal disagrees with the feedback signal, and fail-safe means for placing the controlled device in a fail-safe state when at least one disagreement signal is produced.

The control signals produced by the operation control units are thus used to produce a control output signal for controlling the controlled device. The control output signal is fed back to the control units by the fail-safe control circuit, monitored by the operation control units and compared with the control signals produced by the respective units. If any of the control signals do not match the fed back signal, the fail-safe control circuit disengages power to the controlled device forcing it into a fail-safe state.

In the fail-safe control circuit, agreement in time and amplitude between the result of the operations of operation control units is necessary to produce the control output signal, so that control accuracy is improved. Further, since each of the operation control units detects disagreement between its control signal and the fed back signal, the control mode for the controlled device is forced into a fail-safe mode when a disagreement is detected by any of the operation control units. Thus, it is possible to perform fail-safe control while supervising all of the control system including the controlled load.

An example of a circuit constructed in accordance with the invention will now be described with reference to the accompanying diagram.

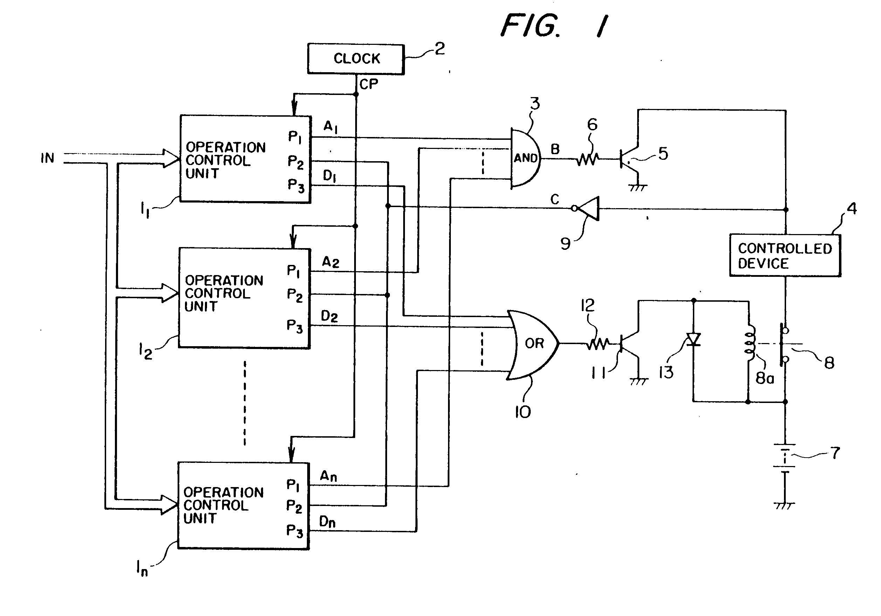

The figure shows an example of a fail-safe control circuit according to the present invention. Identical operation control units 11-1 receive the same control input signal IN and the same clock signal CP generated by a clock pulse generating circuit 2. Each operation control unit 1₁-1 ₙ normally performs identical processing to produce identical output control signals A₁-An from respective ports P An AND gate circuit 3 detects agreement between signals A₁-An and produces a control signal B for controlling a controlled device 4. Atransistor 5 is connected between the controlled device 4 and ground, and has a base receiving the control output signal B through resistor 6. A DC source 7 for energizing the controlled device 4 has a negative pole connected to the ground and a positive pole connected to the controlled device 4 through a fail-safe controlling relay 8. An inverter 9 inverts a signal between the controlled device 4 and the transistor 5 to produce a control feedback signal C which is supplied to respective input ports P₂ of the operation control units 1₁-1ₙ. Each of the control units 1₁-1ₙ compares the feedback signal C with its respective output control signal Aᵢ-An and produces a disagreement detection signal or power interruption control through port P₃ whenever agreement does not occur. An OR gate circuit 10 receives the disagreement detection signals Dᵢ-Dₙ and produces a relay control signal when any one of the operation control units produces a disagreement signal. A transistor 11 is connected between the positive pole of the DC source 7 and ground through a relay coil 8a, and has a base supplied with the output of the OR gate 10 via a resistor 12. Adiode for absorbing counter-electromotive force is connected in parallel with the relay coil 8a.

In the above-described fail-safe control circuit, an input signal IN, such as a vehicle speed signal, a wheel rotational speed signal, etc., is applied in common to the operation control units 1₁-1ₙ. The operation control units 1₁-1ₙ each execute the same program or operation to perform processing based on the received input signal IN. The control units 1₁-1ₙ operate in synchronism with each other based on the commonly received clock signal CP produced by the clock pulse generating circuit 2. Upon detection of a control indicating condition, such as the slip value of a wheel exceeding a predetermined reference value, the control units 1₁-1ₙ produce the output signals Aᵢ-An from their respective ports P₁. Since the operation control units 1₁-1ₙ execute processing under the same conditions, the same output signals Aᵢ-An will be produced from the respective operation control units A₁-An when all units are operating in a normal fashion. During normal operation, the control output signal B produced by the AND gate circuit 3 is a high level "H" indicating agreement in time and amplitude between output signals A₁-Aₙ of the respective control units 1₁-1 ₙ. The transistor 5 is turned on when it receives the control output signal B at its base. When the transistor 5 is turned on, the controlled device 4 is driven by the DC source 7 since the relay contact 8 is normally closed, thus making the anti-skid function effective.

When the transistor 5 is turned on and the controlled device 4 is operating normally, the input signal to the inverter 9 which is at a low level "L" is inverted to produce the control feedback signal C with a high level "H". The feedback signal C is supplied to the respective ports P₂ of the control units 1₁-1 ₙ. The control units 1₁-1ₙ compare the respective output signals A₁-Aₙ with the control feedback signal C, and when disagreement is detected therebetween, the control units 1₁-1ₙ produce the disagreement detection signals Dᵢ-Dₙ which indicate that a malfunction is occurring.

As previously discussed, the operation control units 1₁-1 ₙ are generally microcomputers or microprocessors and simple source code can be produced in such computerized control units that will sample an input on port P2, compare the sample to a signal output from port P1, and output a disagreement signal through port P3 whenever the signals do not match. If the control units 1₁-1ₙ are hard-wired logic circuits, a comparator can be provided for comparing the two signals and producing a disagreement output signal as necessary.

If any one of the disagreement detection signals D₁-Dₙ is produced, the output signal produced by the OR gate circuit 10 is driven to a high level "H". As a result, transistor 11 energizes relay coi il 8a, so that the relay contact 8 is opened to cut off power supplied to the controlled device 4 to stop the operation thereof and to bring the controlled device 4 into a fail-safe state.

If disagreement occurs among the output signals A₁-An, the control output signal B is not produced by the AND gate 3, so that the operation of the controlled device 4 is stopped thereby remaining in the fail-safe state. That is, in the fail-safe control circuit, the control output signal B is produced only when the results of operation of all the control units 1₁-1ₙ are in agreement with each other, providing a highly reliable device. The control units 1₁-1 ₙ compare the output signals A₁-An with the control feedback signal C to determine whether the desired control is being obtained, that is, to positively detect a malfunction in the controlled load system including the AND gate 3, the resistor 6, the transistor 5, the controlled device 4, the relay contact 8, the DC source 7, and the lines connecting these parts together. Consequently, control is exercised only when it is possible to perform complete control and the state is automatically changed into a fail-safe state when an abnormal condition occurs in the controlled load system while performing a control operation, resulting in a higher degree of safety and reliability.

As described above, in the fail-safe control circuit according to the present invention, a control output is sent only when agreement is detected among all the respective output signals of a plurality of control units that are arranged to process the same input signal in synchronism with each other based on the same clock signal. Each of the operation control units detects disagreement between its output signal and a control feedback signal so that when a disagreement detection signal is produced from any one of the operation control units, a fail-safe change-over relay is driven to change-over the control mode into a fail-safe state. Accordingly, the fail-safe control system improves the accuracy of the operation control units as well as the control system including the controlled load.

## Claims

1. Afail-safe control circuit connected to operational control units (1₁-1ₙ) producing control signals (A₁-An) and to a controlled device (4), the fail-safe control circuit including detection means (3, 9) and being characterised by the detection means (3, 9) detecting agreement between the control signals (A₁-Aₙ), activating the controlled device (4) when agreement occurs and producing a feedback signal (C), each operational control unit (1₁-1ₙ) producing a disagreement signal (D₁-Dₙ) when the respective control signal (A₁-An) disagrees with the feedback signal (C), and fail-safe means (10, 11, 8) for placing the controlled device (4) in a fail-safe state when at least one disagreement signal (D₁-Dₙ) is produced.

2. A circuit as in claim 1, wherein the detection means (3) comprises an AND gate (3) connected to the operation control units (1₁-1ₙ) and the controlled device (4); and an inverter (9) connected to the AND gate (3) and the operation control units (1₁-1 ₙ), and producing the feedback signal (C).

3. A circuit as in claim 2, wherein the detection means (3) further comprises a transistor (5) connected to the AND gate, the inverter (9) and the controlled device (4).

4. A circuit as in any of claims 1 to 3, wherein the controlled device (4) is supplied with power by a power supply (7) and the fail-safe means comprises an OR gate (10) connected to the operation control units (1₁-1 ₙ); and a relay (8) connected to the OR gate (10), the power supply (7) and the controlled device (4), and operated by the OR gate (10) to disconnect powerfrom the controlled device (4).

5. Acircuit as in claim 4, wherein the fail-safe means further comprises a transistor (11) connected between the OR gate (10) and the relay (8).

## Patentansprüche

1. Eine ausfallsichere Steuerschaltung, die mit Steuersignale (A₁-An) erzeugenden Betriebssteuereinheiten (1₁-1ₙ) und mit einem gesteuerten Gerät (4) verbunden ist, wobei die ausfallsichere Steuerschaltung Detektionsvorrichtungen (3, 9) enthält und dadurch gekennzeichnet ist, daß die Detektionsvorrichtungen (3, 9) Übereinstimmung zwischen den Steuersignalen (A₁-An) feststellen, das gesteuerte Gerät (4) betätigen, wenn Übereinstimmung auftritt und ein Rückkopplungssignal (C) erzeugen, daß jede Betriebssteuereinheit (1₁-1ₙ) ein Nicht-Übereinstimmungssignal (D₁-Dₙ) erzeugt, wenn das zugehörige Steuersignal (A₁-An) nicht mit dem Rückkoppelsignal (C) übereinstimmt und daß ausfallsichere Vorrichtungen (10, 11, 8) vorgesehen sind, um das gesteuerte Gerät (4) in einen ausfallsicheren Zustand überzuführen, wenn mindestens ein Nicht-Übereinstimmungssignal (D₁-Dₙ) erzeugt wird.

2. Eine Schaltung nach Anspruch 1, bei der die Detektionsvorrichtungen (3) ein UND-Glied (3) enthalten, das mit den Betriebssteuereinheiten (1₁-1 ₙ) und dem gesteuerten Gerät (4) verbunden ist und einen Inverter (9), der mit dem UND-Glied (3) und den Betriebssteuereinheiten (1₁-1 ₙ) verbunden ist und das Rückkopellsignal (C) erzeugt.

3. Eine Schaltung nach Anspruch 2, bei der dei Detektionsvorrichtungen (3) weiter einen Transistor (5) enthalten, der mit dem UND-Glied, dem Inverter (9) und dem gesteuerten Gerät (4) verbunden ist.

4. Eine Schaltung nach irgendeinem der Ansprüche 1 bis 3, bei der das gesteuerte Gerät (4) von einer Energieversorgung (7) mit Leistung versorgt wird und die ausfallsicheren Vorrichtungen ein ODER-Glied (10) enthalten, das mit den Betriebssteuereinheiten (1₁-1ₙ) verbunden ist, sowie ein Relais (8), das mit dem ODER-Glied (10), der Energieversorgung (7) und dem gesteuerten Gerät (4) verbunden ist und vom ODER-Glied (10) betätigt wird, um die Energieversorgung vom gesteuerten Gerät zu trennen.

5. Eine Schaltung nach Anspruch 4, bei der die ausfallsicheren Vorrichtungen weiter einen Transistor (11) enthalten, der zwischen dem ODER-Glied (10) und dem Relais (8) geschaltet ist.

## Revendications

1. Circuit de commande à l'abri de défaillances ou fiable connecté à des unités de commande de fonctionnement (1₁-1ₙ) produisant des signaux de commande (A₁-Aₙ) et à un dispositif commandé (4), le circuit de commande fiable incluant un moyen de détection (3, 9) et étant caractérisé par le moyen de détection (3, 9) qui détecte un accord entre les signaux de commandé (A₁-Aₙ), rend actif le dispositif commandé (4) quand un accord se produit et produit un signal de réaction (C), chaque unité de commande de fonctionnement (1₁-1ₙ) produisant un signal de désaccord (D₁-Dₙ) quand le signal de commande respectif (A₁-Aₙ) est en désaccord avec le signal de réaction (C), et un moyen fiable (10,11,8) pour mettre le dispositif commandé (4) dans un état sur quand au moins un signal de désaccord (Dₗ-Dₙ) est produit.

2. Circuit selon la revendication 1, dans lequel le moyen de détection (3) comprend une porte ET (3) connectée aux unités de commande de fonctionnement (1₁-1 ₙ) et au dispositif commandé (4); et un inverseur (9) connecté à la porte ET (3) et aux unités de commande de fonctionnement (1₁-1ₙ), et produisant le signal de réaction (C).

3. Circuit selon la revendication 2, dans lequel le moyen de détection (3) comprend en outre un transistor (5) connecté à la porte ET, à l'inverseur (9) et au dispositif commandé (4).

4. Circuit selon l'une quelconque des revendications 1 à 3, dans lequel le dispositif commandé (4) est alimenté par une source d'alimentation (7) et le moyen fiable comprend une porte OU (10) connectée aux unités de commande de fonctionnement (1₁-1 ₙ); et un relais (8) connecté à la porte OU (10), à la source d'alimentation (7) et au dispositif commandé (4), et rendu actif par la porte OU (10) pour couper l'alimentation du dispositif commandé (4).

5. Circuit selon la revendication 4, dans lequel le moyen fiable comprend en outre un transistor (11) connecté entre la porte OU (10) et le relais (8).
